# EUROPEAN PATENT APPLICATION

(11) **EP 4 484 821 A1**
(43) Date of publication of application: **01.01.2025**
(21) Application number: 24181179.3
(22) Date of filing: 10.06.2024
(51) Int. Cl.: F21V 8/00

(54) **LIGHTING SYSTEM**

(30) Priority: 26.06.2023 ES 202330526
(71) Applicant: Seat, S.A., 08760 Martorell - Barcelona (ES)
(72) Inventor: SUÑE CASTILLA, Monserrat, 08760 MARTORELL (ES); ALKORTA MAYO, Kristina, 08760 MARTORELL (ES); MORÓN MORTE, Juan Carlos, 08760 MARTORELL (ES); PIQUÉ COSCONERA, Xavier, 08760 MARTORELL (ES)
(74) Representative: Pons Ariño, Angel

(57) **Abstract**

Lighting system, comprising a first light guide (2) according to a longitudinal direction (71), with a first entry surface (21) configured to receive light beams emitted by at least one light emitter (1), a first exit surface (22) and first optical means (23) configured to direct the incoming light beams through the at least one first entry surface (21) towards the first exit surface (22), including a second light guide (3) and second optical means (33), and a dimming area (5) configured to regulate the transmission of light from the first light guide (2) to the second light guide (3) along said longitudinal direction (71), all in order to transmit the light homogeneously.

## Description

The present invention relates to a lighting system with longitudinal light guides provided with optical means and dimming means configured to direct the light beams towards an exit surface and extract them from said light guides uniformly.

### Background of the invention

In lighting systems, the objective is to homogeneously distribute the light received from a single light source. In this regard, there are various diffuser technologies provided with light guides, such as those disclosed in US6288760B1, US2019113673A1, and DE202012101129, which achieve homogeneous distribution by narrowing in the same plane of light exit, narrowing of the optical areas in the perpendicular plane, or narrowing of the guide in the perpendicular plane as it moves away from the light source.

However, such lighting systems still need to increase at least one dimension and/or reduce another dimension while maintaining the homogeneity of transmitted light and manufacturing costs.

### Description of the invention

The object of the present invention is to provide a structure of light guides oriented to retain and transmit light homogeneously even in mutually perpendicular directions, the longitudinal dimension of the light guides being several times larger than the transverse dimensions.

More particularly, the lighting system comprises a first light guide extending in a longitudinal direction, which comprises at least a first entry surface configured to receive light beams emitted by at least one light emitter, a first exit surface extending along said longitudinal direction, and first optical means configured to direct the incoming light beams through the at least one first entry surface towards the first exit surface. Optical means should be understood as optical structures such as grating, optics or the like, which have the function of refracting or redirecting light beams in another direction, for example, in a direction substantially perpendicular to the incident direction. This first light guide is intended to transmit light along the entire length of the first exit surface, whose longitudinal dimension is several times larger than its transverse dimension.

Further, the lighting system also comprises a second light guide extending according to said longitudinal direction, comprising a second entry surface configured to receive the light beams extracted by the first exit surface of the first light guide, a second exit surface, and a second optical means, strategically arranged relative to the longitudinal direction of the second light guide, which are configured to direct the incoming light beams through the second entry surface towards the second exit surface of said second light guide.

The first and second light guides can be made of the same or different materials, with cylindrical or flat geometry.

A joining surface connects the first exit surface of the first light guide along its entire length to the second entry surface of the second light guide. Thus, the aim is to transmit and direct the light so that the light beams are transmitted from the first light guide to the second light guide, minimizing light losses.

The present lighting system is characterized by comprising a dimming area for the light beams transmitted from the first light guide to the second light guide, said dimming area being arranged adjacent to the joining surface and extending along the entire length of the first light guide, the thickness of the dimming area being variable along said longitudinal direction, said dimming area being configured to regulate the light transmission from the first light guide to the second light guide along said longitudinal direction. In this way, the light transmission occurs homogeneously along said longitudinal direction, so that the luminous flux transmitted from the first light guide to the second light guide is substantially constant along said longitudinal direction. As a result, the first light guide retains and transmits the light homogeneously to the second light guide, preferably in the form of a screen, which is homogeneously lighted over its entire length with only one light source.

In this way, although the first optical means direct the light beams towards the first exit surface, part of them will not pass through the dimming area and, therefore, will not enter the second light guide, being returned to the first light guide for transmission through said first light guide. The variable thickness of said dimming area along the longitudinal direction makes it possible to regulate the luminous flux transmitted through said dimming area from the first light guide to the second light guide.

Systems are known for regulating the luminous flux to be extracted by a first light guide through its exit surface, such as a variability in the arrangement of the first optical means or a variability in the size of said first optical means. In this way, it is intended to direct a longitudinally controlled luminous flux to the exit surface by varying the structure of the first optical means along the longitudinal direction. The present lighting system may be complementary or alternative to such known dimming systems.

Preferably, the first light guide is configured to transmit the light beams along the longitudinal direction, the first entry surface being arranged at at least one end of said first light guide, according to said longitudinal direction, for a better capture and orientation of the light beams. Consequently, according to a first embodiment, the first light guide comprises only a first entry surface arranged at a single end of said first light guide. Alternatively, according to a second embodiment, the first light guide comprises first and second entry surfaces arranged at both ends of said first light guide.

In addition, the thickness of the dimming area increases as the distance with respect to at least one first entry surface of said first light guide increases so that the light intensity is distributed homogeneously along the longitudinal direction. According to the first embodiment presented, the thickness of the dimming area is increasing from the first entry surface to the opposite end of the light guide, so that in the area close to the first entry surface, the number of light beams reaching the dimming area and being reflected back towards the first light guide are greater than in an area away from said first entry surface. On the other hand, according to the second embodiment presented, the thickness of the dimming area increases from both ends or entry surfaces to the central area of the first light guide, where the thickness of said dimming area will be maximum. Thus, the number of light beams that reach the dimming area and are reflected back to the first light guide is greater in the areas close to the first inlet areas than in an area far from or central to the first light guide.

More specifically, the joining surface between the first light guide and the second light guide comprises a constant thickness along said longitudinal direction, so that there is a constant cross-sectional area for the passage of light from the first light guide to the second light guide, so that no irregularities or discontinuities in light transmission occur. The joining surface between the two light guides is the surface of the mechanical connection between the two light guides. For example, in the case of light guides of different materials or different luminous properties, it would be the area of contact and connection between them.

Complementarily, the thickness of the dimming area is less than the thickness of the joining surface in the areas close to the at least one first entry surface of said first light guide, so that a dimming effect of the transmitted light is produced, being distributed more homogeneously in the longitudinal direction of the lighting system.

In a preferred embodiment of the invention, the thickness of the dimming area is equal to the thickness of the joining surface in the areas farthest from the at least one first entry surface of said first light guide, to favor the passage and transmission of light towards the end part of the lighting system in its longitudinal direction.

It is remarked that the joining area may comprise a thickness equal to that of the dimming area and vary according to said variation in thickness of the dimming area along the longitudinal direction, both thicknesses being therefore equal at any of the points of said light guides according to said longitudinal direction. In any of the situations, the thickness of the joining area cannot be less than the respective thickness of the dimming area, according to said longitudinal direction. According to a preferred embodiment, the joining area comprises a maximum thickness according to the geometry of the first and second light guides, to maximize the mechanical joining surface between both light guides, improving the robustness of the joint.

According to another aspect of the invention, the joining surface is comprised in a plane substantially parallel to the longitudinal direction, so a transmission of the light beams in a direction perpendicular to the longitudinal direction is made possible.

Additionally, the first optical means are configured to direct the transmitted light beams along the first light guide in a transverse direction, substantially perpendicular to the longitudinal direction, enabling a change in light direction of up to 90°, allowing considerable variations in the illumination direction. Thus, both the regulating surface and the joining surface are substantially perpendicular to said transverse direction.

Complementarily, the second light guide, whether or not including optical means, comprises a white cover covering at least the reflection face.

It should be noted that the dimming area is arranged between the first optical means of the first light guide and the second optical means of the second light guide in such a way as to enable regulated light transmission in addition to the change of direction in the light. Therefore, the dimming area controls the number of light beams entering the second light guide, thus impinging on the second optical means at each point according to said longitudinal direction. Thus, the second optical means are calculated and parameterized so that a controlled number of light beams are incident on them.

According to a particular embodiment of the invention, the dimming area is comprised in the first light guide, said dimming area being arranged between the first optical means and the joining surface, thus effecting the dimming of the transmitted light intensity along the longitudinal direction. In a preferred way the dimming area presents a single body with the first light guide, being able to be manufactured together in the same process of obtaining the first light guide.

Alternatively, the dimming area is comprised in the second light guide, said dimming area being arranged between the joining surface and the second optical means, thus effecting the dimming of the transmitted light intensity along the longitudinal direction. In a preferred way, the dimming area presents a single body with the second light guide, which can be manufactured together in the same process of obtaining the second light guide.

According to another aspect of the invention, the second exit surface of the second light guide extends in the longitudinal direction, the second optical means being arranged on a surface opposite said second exit surface to suitably reflect the incident light towards the second exit surface. Thus, the second exit surface of the second light guide is understood in the longitudinal direction and the transverse direction; the lighting system of the present invention allows the light emitted by said second exit surface to be homogeneous, both along the longitudinal direction (by the action, among others, of the dimming area), and in the transverse direction (by the action, among others, of the second optical means).

In more detail, the joining surface between the first light guide and the second light guide is produced by bi-injection, thus obtaining a more compact and resistant product. Other types of joining systems can be used, but it must be ensured that there is a joining surface between both light guides as continuous as possible, i.e., with full contact between the first exit surface of the first light guide and the second entry surface of the second light guide. This minimizes light transmission losses between the first and second light guides.

The attached drawings show a lighting system constituted in accordance with the invention, by way of non-limiting example. Other features and advantages of said lighting system, object of the present invention, will become apparent from the description of a preferred but not exclusive embodiment illustrated by way of non-limiting example in the accompanying drawings.

### Brief description of the figures

To better understand what has been disclosed above, some drawings are included in which a practical case of embodiment is represented schematically and only as a non-limiting example.
Figure 1A is a side sectional view at a first initial point according to the longitudinal direction of the lighting system, in accordance with the present invention;
Figure 1B is a side sectional view at a second end point according to the longitudinal direction of the lighting system, in accordance with the present invention;
Figure 2 is a front view of the lighting system with its light emitter on one side, in accordance with the present invention;
Figure 3 is a side view of the lighting system including a reflection cover, in accordance with the present invention;
Figure 4A is a front view of the lighting system with its light emitter at one end, in accordance with the present invention;
Figure 4B is a side sectional view at an end point according to the longitudinal direction of the lighting system with a reflection cover, in accordance with the present invention;
Figure 5 is a front view of a variant of the lighting system with two light emitters, each oriented in opposite directions according to the longitudinal direction towards a respective first light guide, each in luminous connection with its respective second light guide, in accordance with the present invention;
Figure 6 is a front view of a variant of the lighting system with two light emitters, each vertically oriented towards each first light guide, each in luminous connection with a second common light guide, in accordance with the present invention;

### Description of a preferred embodiment

Although reference has been made to a specific embodiment of the invention, it is evident to one skilled in the art that the lighting system described is susceptible of numerous variations and modifications, and that all the details mentioned may be substituted by other technically equivalent ones, without departing from the scope of protection defined by the claims appended in the following section.

In view of the aforementioned figures and, in accordance with the numbering adopted, an example of a preferred embodiment of the invention, comprising the parts and elements indicated and described in detail below, can be seen therein.

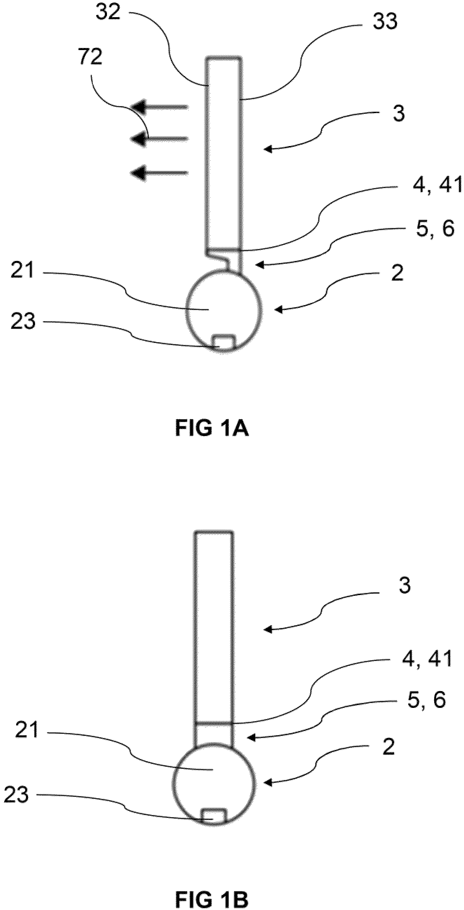

Figure 1A shows a side sectional view according to a longitudinal direction, at a first initial point or close to a first light entry surface according to said longitudinal direction (71) of the lighting system. In particular, a first light guide (2) of circular cross-section can be seen, which is intended to collect the light beams emitted by at least one light emitter (not shown in the present figure) by means of a first entry surface (21) (not shown in the present figure) and transmit them along the longitudinal direction. Said first light guide (2) comprises first optical means (23) which are configured to refract the light beams towards a second light guide (3), in this case, in an upward direction or transverse direction. Said second light guide (3) is flat, which extends both in the longitudinal direction and in the transverse direction, receiving the light beams through a second entry surface (31) to direct them to a second, substantially flat, exit surface (32) by means of second optical means (33).

Between both first (2) and second (3) light guides is a joining surface (4) in a plane (41) arranged substantially perpendicular to the transverse direction, said joining surface (4) being configured to maintain a mechanical linkage between both first (2) and second (3) light guides.

Additionally, a dimming area (5) is provided in the light beam transmission area from the first light guide (2) to the second light guide (3), adjacent or attached to the joining surface (4). The function of said dimming area (5) is to regulate the light beams or luminous flux transmitted from the first light guide (2) to the second light guide (3) as required, as will be explained below.

Figure 1B shows a side sectional view according to a longitudinal direction, at a second end point or away from the first light entry surface according to said in the longitudinal direction (71) of the lighting system. In particular, the first light guide (2) with a constant circular cross-section and the first optical means (23) configured to direct the light beams towards the second light guide (3) can be seen in the same way. The second light guide (3), with a constant rectangular cross-section, can also be seen. Between the two is the joining surface (4) on a plane (41), and attached to it is the light-dimming area (5).

As can be seen, both the first light guide (2), the second light guide (3), and the joining surface (4) have constant cross-section along said longitudinal direction. Conversely, the thickness or light beam transmission surface of the dimming area (5) varies.

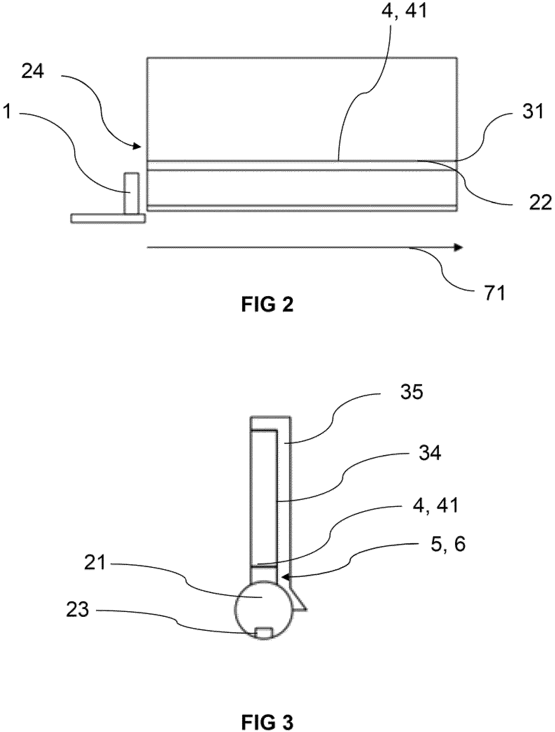

Figure 2 shows a front view of the lighting system with its light emitter (1) on one side, according to the longitudinal direction (71). A first exit surface (22) and a second entry surface (31) are shown, coincident with the joining surface (4), being located in the same plane (41).

Based on said Figure 2, the section depicted in Figure 1A is equivalent to an area in close proximity to said light emitter (1), thus in a left area of said Figure 2. In contrast, the section represented in Figure 1B is equivalent to an area away from said light emitter (1), therefore in a right area of said Figure 2. Thus, in a lighting system that does not have a dimming area (5), the amount of light beams that are extracted from the first light guide (2) through the first exit surface (22) in the area away from the light emitter (1) are smaller than the amount of light beams extracted by the same first exit surface (22) but in an area close to the light emitter (1), since many light beams have been redirected to said first exit surface (22) by means of the first optical means (23).

In order to compensate for this, the lighting system of the present invention comprises a dimming area (5) which makes it possible to vary the light beam transmission section from the first light guide (2) to the second light guide (3). Thus, the passage section or thickness of the dimming area (5) grows as the distance with respect to the light emitter (1) or first entry surface (21) increases, according to the longitudinal direction. Thus, in an area close to the light emitter (1), the thickness of the dimming area (5) is reduced, so that the number of light beams passing through said dimming area (5) is lower than the number of light beams passing through said dimming area (5) in an area away from said light emitter (1), since the thickness of the dimming area (5) is greater. In other words, the number of light beams that are reflected by said dimming area (5) and returned again to the first light guide (2) for internal transmission according to the longitudinal direction is greater in an area close to the light emitter (1) than in an area far away.

Said thickness may increase linearly as the distance with respect to the first entry surface (21) increases, according to said longitudinal direction. The increase can also be other, such as an exponential increase.

According to another embodiment not shown in the figures, in the case of a lighting system symmetrical in the longitudinal direction, i.e. comprising at each end of the first light guide (2) a light emitter (1), the dimming area (5) would comprise a minimum thickness in the area close to each of the ends or first light entry surfaces (21), and would comprise a maximum thickness in the central area or furthest away from each of the ends or first light entry surfaces (21).

The object of the present invention is to achieve homogeneity in the light intensity emitted by the second exit surface (32) of the second light guide (3), avoiding that a higher light intensity is observed in the areas of the second exit surface (32) close to the light emitters (1) and a lower light intensity in the areas of the second exit surface (32) away from the light emitters (1).

In order to increase luminous efficiency and reduce light losses, a side view of the lighting system additionally comprising a white cover (35) can be seen in Figure 3. Said white cover (35) is located on the rear surface of the second light guide (3), that is, on the surface opposite to the second exit surface (32) of the light beams, to reflect towards the inside of said second light guide (3) light beams that would otherwise be lost. Although said Figure 3 represents a front section as indicated in Figure 1B, the white cover (35) extends covering all said rear surface along the entire length of the second light surface (3).

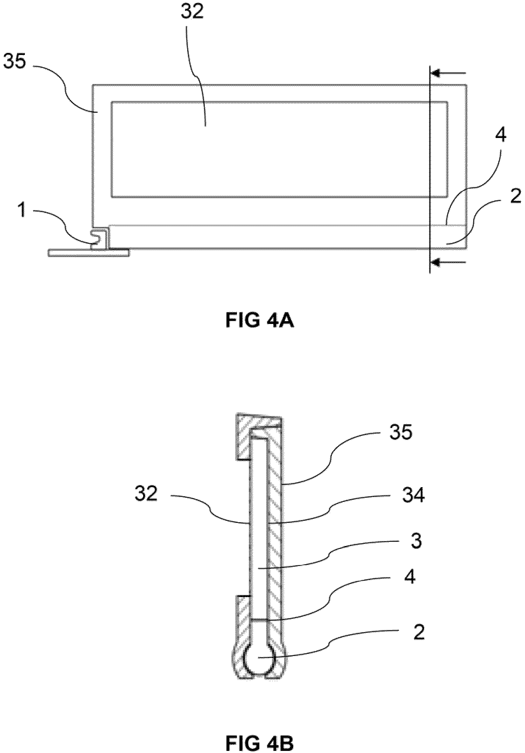

Figure 4A shows a front view of the lighting system with its light emitter (1) on one side. The first light guide (2) is also visible, as well as the joining surface (4) with the second light guide (3) with its second exit surface (32). Said exit surface (32) is masked by some opaque elements, which perimetrically cover said exit surface (32), with the objective of limiting the light exit area of said second light guide (3).

Figure 4B shows a side sectional view at an end point in the longitudinal direction of the lighting system, including a white reflecting cover (35), as explained above, and said opaque elements masking or delimiting the second exit surface (32), as explained above. The first light guide (2) can be seen to be luminously connected via the joining surface (4) to the second light guide (3) and its second exit surface (32).

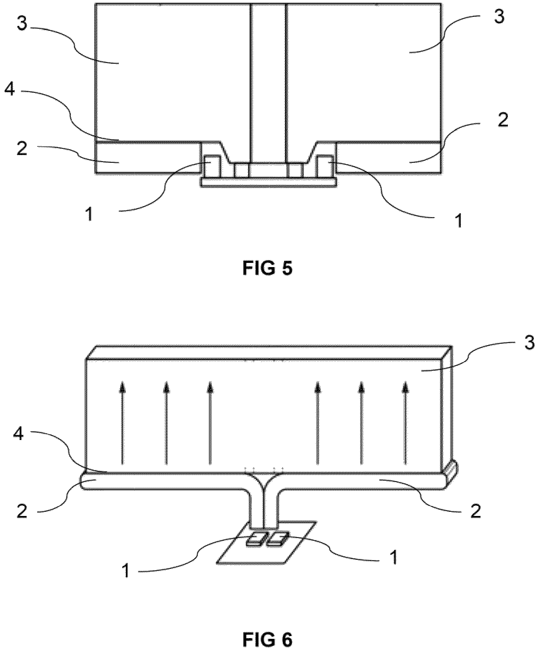

Figure 5 shows a front view of a variant of the lighting system with two light emitters (1), each oriented according to the longitudinal direction in opposite directions towards a respective first light guide (2). Thus, the light emitter (1) arranged on the left of said Figure 5 emits light towards the first light guide (2) arranged on the left, which transmits the light beams according to the longitudinal direction in a first direction. On the contrary, the light emitter (1) arranged on the right of said Figure 5 emits light towards the first light guide (2) arranged on the right, which transmits the light beams according to the longitudinal direction in a second direction, opposite to the first direction. Additionally, the lighting system comprises two additional light emitters (1) configured to emit light in a vertical or transverse direction, introducing the emitted light beams directly into the respective second light guide (3). Both first light guides (2) are in luminous connection with their respective second light guide (3), through the joining surface (4). As seen, before said arrangement of light emitters (1) the printed circuit board or PCB that feeds them can be joint or single.

Figure 6 shows a front view of a variant of the lighting system with two light emitters (1), both oriented vertically or in a transverse direction towards each first light guide (2). Each of the first light guides (2) transmits the light beams in an opposite direction according to said longitudinal direction. Furthermore, both first light guides (2) are in luminous connection with a second common light guide (3) through the joining surface (4).

In any of the embodiments shown in Figures 5 and 6, there is a dimming area (5) for the transmission of the light beams between the first light guides (2) and the at least one second light guide (3) as described above, to ensure homogeneity in the light intensity emitted by said at least one second light guide (3).

The embodiments presented in said figures 5 and 6 are intended to achieve homogeneous illumination also in the areas close to the light emitters (1), when the lighting system requires a plurality of light emitters (1). Such is the example of a motor vehicle when it is desired to homogeneously illuminate a lighted surface between the right and left pilot lights. Due to the large distance between the two pilots, it is not possible to achieve homogeneity along this longitudinal direction if only two light emitters (1) are used, each located close to a respective pilot light and illuminating in opposite directions towards the opposite light emitter (1). Thus, more light emitters (1) should be placed between the two pilots.

The details, shapes, dimensions, and other accessory elements, as well as the components used in the implementation of the lighting system, may be conveniently substituted by others that are technically equivalent and do not depart from the essentiality of the invention nor from the scope defined by the claims included below the following list.

### List of numerical references:

- 1: light emitter
- 2: first light guide
- 21: first entry surface
- 22: first exit surface
- 23: first optical means
- 24: extreme
- 3: second light guide
- 31: second entry surface
- 32: second exit surface
- 33: second optical means
- 34: reflection face
- 35: white cover
- 4: joining surface
- 41: plane
- 5: dimming area
- 6: transmission area
- 71: longitudinal direction
- 72: transverse direction

## Claims

1. Lighting system, comprising:
- a first light guide (2) extending in a longitudinal direction (71), which comprises at least a first entry surface (21) configured to receive light beams emitted by at least one light emitter (1), a first exit surface (22) extending along said longitudinal direction (71), and first optical means (23) configured to direct the incoming light beams through the at least one first entry surface (21) towards the first exit surface (22), and
- a second light guide (3) extending in said longitudinal direction (71), comprising a second entry surface (31) configured to receive the light beams extracted by the first exit surface (22) of the first light guide (2), a second exit surface (32), and second optical means (33) configured to direct the incoming light beams through the second entry surface (31) (21) towards the second exit surface (32) of said second light guide (3), wherein the first exit surface (22) of the first light guide (2) is connected along its entire length to the second entry surface (31) of the second light guide (3) by a joining surface (4),
being the lighting system **characterized by** comprising a dimming area (5) for the light beams transmitted from the first light guide (2) to the second light guide (3), said dimming area (5) arranged adjacent to the joining surface (4) and extending along the entire length of the first light guide (2), the thickness of the dimming area (5) being variable along said longitudinal direction (71), said dimming area (5) configured to regulate the light transmission from the first light guide (2) to the second light guide (3) along said longitudinal direction (71).

2. Lighting system according to claim 1, wherein the first light guide (2) is configured to transmit the light beams along the longitudinal direction (71), the first entry surface (21) being arranged at at least one end (24) of said first light guide (2), in said longitudinal direction (71).

3. Lighting system according to any one of the preceding claims, wherein the thickness of the dimming area (5) is increasing as the distance to the at least one first entry surface (21) of said first light guide (2) increases.

4. Lighting system according to any one of the preceding claims, wherein the joining surface (4) between the first light guide (2) and the second light guide (3) comprises a constant thickness along said longitudinal direction (71).

5. Lighting system according to claim 4, wherein the thickness of the dimming area (5) is less than the thickness of the joining surface (4) in the areas close to the at least one first entry surface (21) of said first light guide (2).

6. Lighting system according to any one of claims 4 or 5, wherein the thickness of the dimming area (5) is equal to the thickness of the joining surface (4) in the areas furthest away from the at least one first entry surface (21) of said first light guide (2).

7. Lighting system according to any one of claims 4 to 6, wherein the joining surface (4) is comprised in a plane (41) substantially parallel to the longitudinal direction (71).

8. Lighting system according to any of the preceding claims, wherein the first optical means (23) are configured to direct the transmitted light beams along the first light guide (2) in a transverse direction (72) substantially perpendicular to the longitudinal direction (71).

9. Lighting system according to any one of the preceding claims, wherein the dimming area (5) is arranged between the first optical means (23) of the first light guide (2) and the second optical means (33) of the second light guide (3).

10. Lighting system according to claim 9, wherein the dimming area (5) is comprised in the first light guide (2), said dimming area (5) being arranged between the first optical means (23) and the joining surface (4).

11. Lighting system according to claim 9, wherein the dimming area (5) is comprised in the second light guide (3), said dimming area (5) being arranged between the joining surface (4) and the second optical means (33).

12. Lighting system according to any one of the preceding claims, wherein the second exit surface (32) of the second light guide (3) extends in the longitudinal direction (71), the second optical means (33) being arranged on a surface opposite to said second exit surface (32).

13. Lighting system according to any one of the preceding claims, **characterized in that** the joining surface (4) between the first light guide (2) and the second light guide (3) is produced by bi-injection.
